# EUROPEAN PATENT APPLICATION

(11) **EP 3 858 907 A1**
(43) Date of publication of application: **04.08.2021**
(21) Application number: 20154346.9
(22) Date of filing: 29.01.2020
(51) Int. Cl.: C08J 11/04, B29B 17/00

(54) **PROCESS FOR RECYCLING POLYSTYRENE**

(71) Applicant: GREEN UNION S.R.L., 20900 Monza, Monza e Brianza (IT)
(72) Inventor: LORENZI, Micaela, I-20900 Monza, MONZA E DELLA BRIANZA (IT)
(74) Representative: Long, Giorgio

(57) **Abstract**

The present invention relates to a method for recycling polystyrene, in particular polystyrene from constructions, both as waste material and as a post-consumer material.

In particular, the present invention relates to a method for recycling waste and/or scrap polystyrene, of the EPS and/or XPS type, comprising the following steps:
(a) compressing and grinding the waste and/or scrap polystyrene, of the EPS and/or XPS type;
(b) adding an antioxidant additive;
(c) adding one or more strong bases;
(d) extruding the polystyrene to form recycled polystyrene in granulated form.

## Description

### Field of the invention

The present invention relates to a method for recycling polystyrene, in particular polystyrene from constructions, both as waste material and as a post-consumer material.

### Description of the prior art

Polystyrene (or PS) is used in large quantities to make building insulation panels, both as foam material (EPS technology) and as extruded material (XPS technology). In either case, panels of different sizes and thicknesses are obtained, which can be used to thermally insulate homes or other enclosed spaces.

Because of their use, such panels must have given fire resistance, i.e. they must comply with strict fire regulations, which differ from country to country. In order to achieve the required flame retardant effect, HBCD (hexabromocyclododecane) was normally added to the polystyrene until 2015.

Since 2015, following the ban on the use of HBCD, such a compound has been replaced with organic brominated molecules of a different nature.

Furthermore, various other substances are added to the polystyrene, in particular, dicumyl peroxide in the case of expanded panels and dicumene in the case of extruded panels.

While the foam panel is made at a temperature of about 140°C, the extruded panel is processed at a temperature of over 170°C to over 200°C. Considering that HBCD and the other brominated molecules used decompose at 185-190°C, that dicumyl peroxide decomposes at 150°C and that dicumene decomposes at 210°C, it follows that only the production of expanded panels, which takes place at 140°C, allows the use of additives without decomposition problems. Conversely, for extruded panels, it is necessary to formulate the composition so that the decomposition products do not alter the quality of the final product. If the aforesaid substances are not stabilized, the decomposition products resulting therefrom can cause various drawbacks, such as the staining of the panel, decay of the mechanical properties, cuts and surface cracks, so that the panel is unusable.

Indeed, above 200°C, the flame-retardant molecule generates brominated radicals which, in the presence of dicumene and peroxides, break the polystyrene chains and cause oxidative phenomena.

In order to overcome these drawbacks, stabilizers are added to the composition of polystyrene, such as weak acid scavengers, hydrotalcite or bromine captors to block brominated radicals. Antioxidants are also added to prevent the radicals in the polymer or brominated compound from reproducing exponentially.

The acid scavenger is a weak base capable of capturing only the bromine which detaches from the molecule. A strong base would also tear the bromine from the molecule itself, thus deactivating the flame-retardant compound.

The large quantity of waste polystyrene or scrap panels would require recycling of such material, both of the EPS and the XPS type. However, the recycling involves mechanical processing which comprises the compression, grinding and re-extrusion of the material in order to obtain reusable polystyrene granulate. Considering that the extrusion takes place at temperatures above 200°C, the dicumyl peroxide contained in the EPS polystyrene waste and scrap would decompose, thus generating radicals which would initiate the decomposition phenomena described above. In particular, the polystyrene chains would be broken and recombined, thus obtaining an increase in average molecular weight, such to make the polymer unusable. This substantially prevents the recycling of EPS polystyrene.

For XPS polystyrene, even if the stabilizers it contains would allow a first recycling process, the stabilizer would soon be consumed, so continuous recycling of this material is not possible.

Even the simple disposal of polystyrene panels produced before 2015 has considerable drawbacks. Indeed, the material contains HBCD, which is considered to be special toxic waste and therefore requires care and high disposal costs. Nor can it be recycled as XPS because the presence of HBCD bans it.

There is a polystyrene recycling process which involves the elimination of brominated compounds and the recovery of bromine derived therefrom but this process is complex and expensive and therefore does not allow the direct recycling of such material.

It is the object of the present invention make available a process for the recycling of EPS and XPS polystyrene, either containing HBCD or other brominated compounds, which provides mechanical processing and is simple and cost-effective to implement.

Such an object is achieved by a method as outlined in the accompanying claims, the definitions of which form an integral part of the present description.

### Description of the invention

The method according to the present invention comprises the following steps:
(a) compressing and grinding the waste and/or scrap polystyrene, of the EPS and/or XPS type;
(b) adding an antioxidant additive;
(c) adding one or more strong bases;
(d) extruding the polystyrene to form recycled polystyrene in granulated form.

Steps (b) and (c) are not necessarily performed in the order shown. For example, step b) may be preceded by step c), or steps b) and c) may be performed at the same time. Furthermore, it is also possible to perform steps b) and c) together with step d), i.e. to introduce the ground polystyrene to be recycled, the antioxidant additive and one or more strong bases in any order directly into the extruder.

Waste and/or scrap polystyrene comes from the processing or disposal of polystyrene panels which can be used or are used in constructions.

Step a) is performed using conventional compacting and grinding equipment in the plastic recycling sector.

The antioxidant additive used in step b) is chosen from among antioxidants which can be used as radical scavengers and is preferably chosen from sterically hindered phenol, e.g. 2,6-di-tert-butyl-p-cresol, substituted N-phenylaniline, sterically hindered aromatic amine, phosphite ester, e.g. tris(2,4-di-tert-butylphenyl)phosphite, inorganic phosphite or phosphate, e.g. potassium mono-orthophosphate, and mixtures thereof.

The antioxidant additive is added to the polystyrene to be recycled in a quantity preferably between 0.3% and 5% by weight, more preferably between 0.5% and 5% by weight.

The one or more strong bases used in step c) are chosen from alkali or alkali earth metal hydroxides or oxides, such as sodium hydroxide, potassium hydroxide, lithium hydroxide, calcium hydroxide, magnesium hydroxide, calcium oxide and mixtures thereof. Strong organic bases, e.g. 1,4-diazabicycle[2.2.2]octane (DABCO), either alone or in a mixture with one or more strong inorganic bases as defined above, may also be used.

The one or more strong bases are added to the polystyrene to be recycled in a quantity preferably between 0.3% and 5% by weight, more preferably between 0.5% and 5% by weight.

The step of extruding d) is performed with a conventional extruder, e.g. a single screw extruder working at a temperature higher than 240°C.

The function of the antioxidant additive is to stabilize the radical forming compounds, in particular, dicumyl peroxide and dicumene, while one or more strong bases have the function of decomposing the HBCD, with the formation of bromine salts and alkanes, which can remain in the final compound without causing either functional or environmental problems.

The method of the invention, therefore, achieves its purpose, since it allows the direct recycling of EPS and XPS polystyrene by means of a mechanical process comprising a step of extruding, thereby avoiding intermediate operations of bromine elimination and recovery, which would require complex systems and considerably higher costs.

Obviously, a person skilled in the art may make further changes and variants to the present invention all without departing from the scope of protection of the invention, as defined in the following claims.

## Claims

1. A method for recycling waste and/or scrap polystyrene, of the EPS and/or XPS type, comprising the following steps:
(a) compressing and grinding the waste and/or scrap polystyrene, of the EPS and/or XPS type;
(b) adding an antioxidant additive;
(c) adding one or more strong bases;
(d) extruding the polystyrene to form recycled polystyrene in granulated form.

2. The method according to claim 1, wherein the steps b) and c), or the steps b), c) and d), are performed at the same time.

3. The method according to claim 1 or 2, wherein the antioxidant additive used in step b) is chosen from the antioxidants which can be used as radical scavengers and is preferably chosen from sterically hindered phenol, substituted N-phenylaniline, sterically hindered aromatic amine, phosphite ester, inorganic phosphite or phosphate and mixtures thereof.

4. The method according to claim 3, wherein the antioxidant additive used in step b) is chosen from 2,6-di-tert-butyl-p-cresol, substituted N-phenylaniline, sterically hindered aromatic amine, tris(2,4-di-tert-butylphenyl)phosphite, potassium mono-orthophosphate and mixtures thereof.

5. The method according to claim 3 or 4, wherein the antioxidant additive is added to the polystyrene to be recycled in a quantity between 0.3% and 5% by weight, preferably between 0.5% and 5% by weight.

6. The method according to any one of the claims from 1 to 5, wherein one or more strong bases used in step c) are chosen from hydroxides or oxides of alkali or alkaline-earth metals and mixtures thereof or from strong organic bases, either alone or in a mixture with one or more hydroxides or oxides of alkali or alkaline earth metals.

7. The method according to claim 6, wherein one or more strong bases used in step c) are chosen from sodium hydroxide, potassium hydroxide, lithium hydroxide, calcium hydroxide, magnesium hydroxide, calcium oxide, 1,4-diazabicyclo[2.2.2]octane (DABCO) and mixtures thereof.

8. The method according to claim 6 or 7, wherein one or more strong bases are added to the polystyrene to be recycled in a quantity between 0.3% and 5% by weight, preferably between 0.5% and 5% by weight.

9. The method according to any one of the claims from 1 to 8, wherein the step d) of extruding is performed with a single screw extruder working at a temperature higher than 240°C.
